# EUROPEAN PATENT APPLICATION

(11) **EP 2 644 025 A1**
(43) Date of publication of application: **02.10.2013**
(21) Application number: 12161931.6
(22) Date of filing: 28.03.2012
(51) Int. Cl.: A01G 31/02

(54) **Movable aeroponic growth unit for growing plants and an improved system for growing plants aeroponically**

(71) Applicant: OLUSCULUM PTE LTD, 049908 (SG)
(72) Inventor: Steuart, Douglas, 20260 CHONBURI (TH)
(74) Representative: Larcher, Dominique

(57) **Abstract**

Present invention relates to a movable aeroponic growth unit for growing plants, an improved system for growing plants aeroponically, a greenhouse for growing plants aeroponically as well as an improved method for growing plants aeroponically. The movable aeroponic growth unit 1 comprises a vessel 2 forming a root chamber 3 for enclosing the root portion 4 of a plant 5, a cover 6 for sealing the top opening of the vessel 2 comprising at least one aperture 7, at least one spraying means 8 inside the vessel for humidifying the interior of the vessel 2 and piping for nutrient solution feed to the spray means 8 and for drainage of excess nutrient solution from the root chamber 3. The vessel 2 of the aeroponic growth unit 1 is mounted on at least three wheels 10 that permit free running of the vessel 2 along one movement axis only as indicated by the arrows in figure 1. The present invention furthermore relates to a system of more than one aeroponic growth unit as shown schematically in figures 3a and 3b, where the units are spaced directly adjacent to each other so that the covers 6 of the adjacent root chambers 3 leave virtually no space 11 between them. Present invention also relates to an improved method of growing plants aeroponically comprising the steps of planting plants in the improved system for growing plants aeroponically, controlling the temperature of the nutrient solution and providing the roots in the root chamber with the nutrient solution, and periodically lowering the plants deeper into the growth chamber to increase root development.

## Description

### BACKGROUND

Many different ways of growing plants have been developed over the years. One successful method, Hydroponics, is based on the fact that the nutrients required for plant growth are delivered to the plants by water only. Soil is not required in this system.

The most common hydroponic system uses the so-called Nutrient Film Technique (NFT). NFT foresees the provision of a fine sheet of fiberglass over which nutrient solution is flowed over the base of a plant growing chamber, and over and through which the plant roots develop within the root chamber, to the extent of the root chamber size. The water surplus runs off and returns to a reservoir tank for recirculation.

Other Hydroponic mediums used are lava rock, coconut fibre, peat or gravel.

Another method of growing plants without soil is Aeroponics. In Aeroponics the plants are grown without any root medium. The plant is suspended over the root chamber and the roots periodically sprayed with a water/air/nutrient mix. This system is considered to be more difficult to handle than NFT, mainly because the spray jets frequently block.

Various different aeroponic growth units have been described in prior art documents.

For example US20070113472A1 discloses an aeroponic system for growing plants that contains a chamber, a cooling system and a liquid delivery system. The chamber includes a top portion for supporting plants and/or seeds. Plants can be supported by holders so that the roots of the plant are located within the chamber and the remainder of the plant is located outside the chamber. The chamber contains a nutrient solution which is delivered to the plants and/or seeds by the liquid delivery system and maintained within a liquid temperature range by the cooling system. US20070113472A1 also discloses a method for aeroponically growing a plant in which a root of the plant is disposed within the chamber, a liquid is provided within the chamber, at least one of the liquid and the chamber is cooled with a cooling assembly and the liquid is delivered to the root with a liquid delivery system.

In US4669217 a computer controlled aeroponics growth unit is disclosed in which a lower reservoir containing a liquid plant nutrient is in fluid communication with an upper reservoir containing a plant propagation support module. The nutrient fluid in the lower nutrient reservoir is forced up into the upper reservoir by compressed gas for predetermined cycles and periods of time to provide nutrients to the roots of the plants. A computer is used to control air and root temperatures, humidity, nutrient quality, nutrient cycling rate and level in the first and second reservoirs and utilizes an image recognition apparatus to measure plant growth rate and produce maturity or ripeness to achieve optimum or maximum growth rate potential for the plant being propagated.

Energy efficiency is one key to economic profit. In aeroponic systems the control of the temperature of the roots is key to improved growth of the plants. In aeroponic systems comprising many aeroponic units it is therefore important to improve temperature control and provide a manner of keeping the required energy levels for maintaining optimum temperature at a minimum. The spacing of the aeroponic units to each other is therefore an important factor, since close spacing can improve energy efficiency of the whole system.

In EP 0164387, an earlier patent of the applicant, a storage and handling installation for palletized goods is disclosed. In this system each pallet rests on a respective wheeled trolley. The trolleys are organized in rows, wherein each trolley in one row can only be moved in the longitudinal or only in the transverse direction of the row. With this setup it is possible to store the pallets in long rows and still keep them easily accessible. In this way the use of storage space can be maximized.

Another important factor for improving space efficiency in a greenhouse setup is the plant density. Normally the root spread determines the spacing of plants for growing. In soil or NFT medium the roots radial out from the centre horizontally and the plant spacing is to allow a root radius for each plant. However in aeroponics the roots hang freely in the root chamber and extend vertically rather than horizontally. The aeroponics system itself therefore allows more dense spacing of plants.

### SUMMARY OF THE INVENTION

Present invention relates to a movable aeroponic growth unit for growing plants, an improved system for growing plants aeroponically, a greenhouse for growing plants aeroponiclly as well as an improved method for growing plants aeroponically.

The movable aeroponic growth unit according to present invention comprises a vessel forming a root chamber for enclosing the root portion of a plant, a cover for sealing the top opening of the vessel comprising at least one aperture, at least one spraying means inside the vessel for humidifying the interior of the vessel and piping for nutrient solution feed to the spray means and for drainage of excess nutrient solution from the root chamber. The vessel of the aeroponic growth unit is mounted on at least three wheels that permit free running of the vessel along one movement axis only.

In one embodiment of present invention the spraying means of the aeroponic growth unit comprise a pipe with a run off venting valve suitable for high volume bypass flow to avoid blockage of the spraying means.

In one embodiment of present invention the movable aeroponic growth unit comprises a rubber mount for mounting a plant that fits into the at least one aperture.

In one embodiment of present invention the movable aeroponic growth unit for growing plants comprises a root tube extending downwards from the bottom of the root chamber. This root tube is suitable for receiving the root of a plant.

In another embodiment the movable aeroponic growth unit for growing plants comprises a set of guiding strings in the root chamber for routing the roots. The routing preferably is done past mounted spreaders, vertically down from the plant mount, horizontally across the bottom of the tank, and then vertically back up to exit near the top of the opposite tank side. Additional spray points can be located within the tank as needed to maximize the root growth.

Present invention furthermore relates to an improved system for growing plants aeroponically, comprising at least two movable aeroponic growth units as described above. At least two aeroponic growth units are placed directly adjacent to each other so that the covers of the vessels are tightly fitted against each other. The wheels of the vessels are aligned to allow movement of the vessels along the same movement axis. The improved system for growing plants aeroponically further comprises means for controlling the temperature of the root chamber.

In one embodiment of the invention the aeroponic growth units in the improved system for growing plants aeroponically are arranged in rows. The movement axes of the wheels transverse the longitudinal directions of the rows.

In one embodiment of the improved system for growing plants aeroponically the means for controlling the temperature in the root chamber comprise a cooling device.

In one embodiment the improved system for growing plants aeroponically comprises a reservoir of nutrient solution or water connected to the spraying means via flexible piping.

The reservoir can be a remote reservoir used by more than one aeroponic growth unit, or a wheeled reservoir tank provided under each aeroponic growth unit.

Present invention further more relates to a greenhouse for growing plants aeroponically. This greenhouse comprises the improved system for growing plants aeroponically as described above and a solar chimney for temperature control.

Present invention furthermore relates to an improved method of growing plants aeroponically comprising the steps of planting plants in the improved system for growing plants aeroponically, controlling the temperature of the nutrient solution and providing the roots in the root chamber with the nutrient solution, and periodically lowering the plants deeper into the growth chamber to increase root development.

In one embodiment of the improved method of growing plants aeroponically the plants are planted in an offset manner to improve spacing.

### DETAILED DESCRIPTION

Present invention relates to a movable aeroponic growth unit for growing plants, an improved system for growing plants aeroponically, a greenhouse for growing plants aeroponically as well as an improved method for growing plants aeroponically.

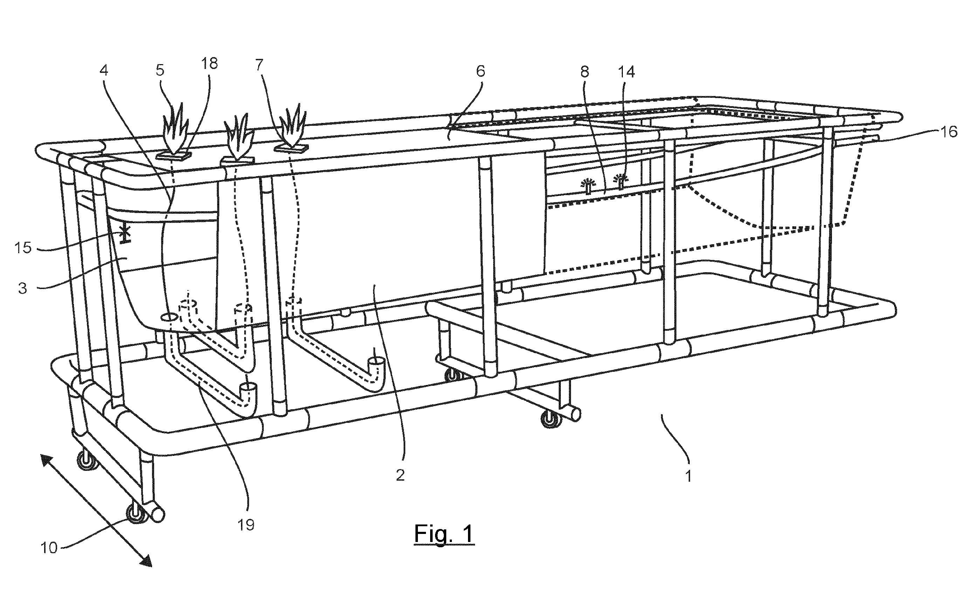

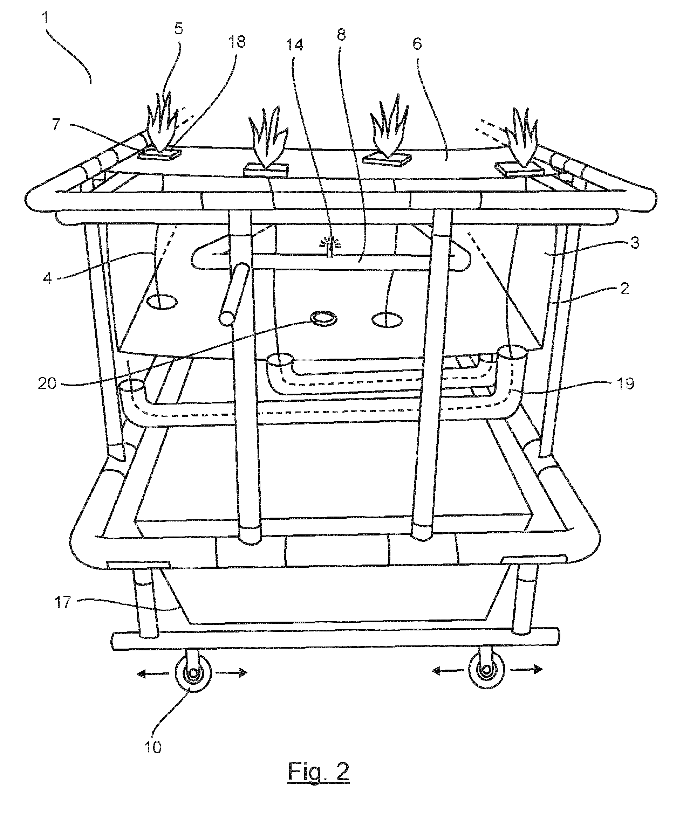

Figures 1 and 2 depict a perspective front and side view of one embodiment of the movable aeroponic growth unit 1 according to present invention. The movable aeroponic growth unit 1 comprises a vessel 2 forming a root chamber 3 for enclosing the root portion 4 of a plant 5, a cover 6 for sealing the top opening of the vessel 2 comprising at least one aperture 7, at least one spraying means 8 inside the vessel for humidifying the interior of the vessel 2 and piping for nutrient solution feed to the spray means 8 and for drainage of excess nutrient solution from the root chamber 3. For clarity reasons the piping is not shown in figures 1 and 2. The vessel 2 of the aeroponic growth unit 1 is mounted on at least three wheels 10 that permit free running of the vessel 2 along one movement axis only as indicated by the arrows in figures 1 and 2. In a preferred embodiment the vessel has four or six wheels.

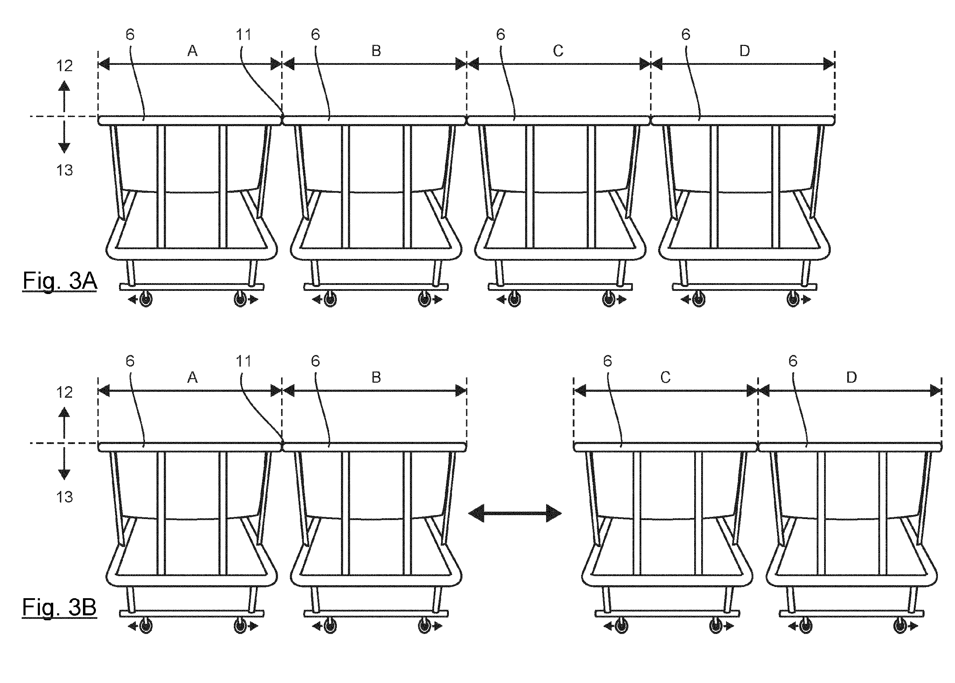

The placing of the aeroponic growth tanks on wheels that permit free running along one movement axis improves space utilization. The aeroponic growth units can be spaced closely together and in rows as depicted in figure 3, where the front view of the first tanks of four rows (A-D) are shown. The rows A-D can contain as many tanks as desirable. When the wheels are positioned to move at right angles to the row, whole rows containing a plurality of aeroponic growth units can be moved at once. In a larger scale aeroponic growth setup, where more than one row of aeroponic growth units is used, the rows can be positioned directly adj acent to each other without the need of leaving access aisles free between the rows, since the rows can easily be separated where needed in order to provide an access aisle as seen in figure 3 a and 3b depicting four rows A-D directly adjacent in 3 a and four rows A-D containing an access isle between rows B and C in 3b. This setup allows for high compression of the growing area.

In addition to the great advantage of space optimization this setup provides for increased efficiency of any heating or cooling requirements, since the individual aeroponic growth units can be spaced directly adjacent to each together as can equally be seen in figure 3a and 3b, leaving virtually no space 11 between the covers 6 of two adjacent aeroponic units.

One of the key features to be controlled for optimal growth in aeroponic units is the temperature in the root chamber 3. Cooling or heating the root chamber to the optimum temperature maximizes plant growth. In hot climates the root chamber 3 has to be cooled down in comparison to the temperature present in the greenhouse, i.e. the temperature that the foliage of the plant is subjected to. This can be done by either cooling down the root chamber 3 with a cooling device, or more preferably by cooling down the nutrient solution that is sprayed onto the roots 4. By using cooled nutrient solution the temperature in the chamber 3 is cooled down as well.

In a system of more than one aeroponic growth unit as shown schematically in figures 3a and 3b it is important that the units are spaced directly adjacent to each other so that the covers 6 of the adjacent root chambers 3 leave virtually no space 11 between them. A plurality of units together will then form an upper 12 and a lower compartment 13, the lower compartment 13 containing the root chambers 3 and the upper compartment containing the plant foliage. In hot climates the lower compartment 13 is kept cool whereas the upper compartment 12 is temperature regulated by the greenhouse surrounding. Through the close spacing of the aeroponic units, the surrounding units act as insulation for each other, thus minimizing the energy needed for cooling of the root chambers 3.

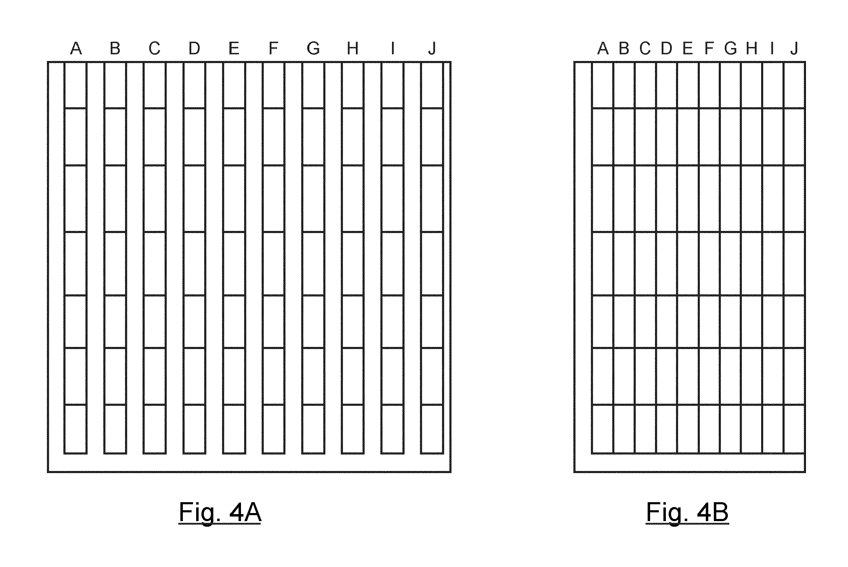

As shown in figure 4 and table 1 below the use of space in a greenhouse setup is greatly reduced by use of such wheeled aeroponic growth units. Figure 4a shows rows A-J of aeroponic growth units where each row is separated from the next row by an access aisle. Figure 4b shows rows A-J being spaced directly adjacent as described above and as envisaged by present invention. As shown in table 1 the conventional layout in greenhouses of 1 metre aisles and ten 1.2m wide rows of aeroponic units (A-J) are compressed by use of movable aeroponic growth units according to present invention from an area of 23 metres by 23 metres to 23 metres by 13 metres.

| Table 1 : Space usage improvement via wheeled units | | | | | |
|---|---|---|---|---|---|
| | Length (m) | Width (m) | Plant area (m²) | Aisle Area (m²) | Total (m²) |
| Conventional units | 23 | 23 | 264 | 265 | 529 |
| | | | | | |
| Wheeled units | 23 | 13 | 264 | 35 | 299 |
| | | | | | |
| | | | Area usage improvement | | 176.92% |

It is to be understood that the use of conventional multidirectional wheels will not provide the same advantage of easy movement of several aeroponic growth units together, since the wheels would change direction while handling, eventually blocking the movement of all units in one direction. It is therefore essential for present invention that unidirectional wheels are used.

The spraying means 8 in an aeroponic system as depicted in figures 1 and 2 are one key factor to be controlled for smooth and prolonged running of the system. If the spray heads 14 of the spraying means 8 are blocked by incoming debris, the spray heads 14 need to be cleaned or even exchanged often, increasing costs of running an aeroponics system. In one embodiment of present invention as shown in figure 1, the spraying means 8 of the aeroponic growth unit comprise a pipe with a run off venting valve 15 suitable for high volume bypass flow to avoid blockage of the spraying means 8. Keeping the spraying means 8 free of such blockage allows prolonged running times of the system without maintenance. Use of a run off venting valve 15 at the opposite end of the fluid inlet 16 of the aeroponic spray means 8 means that a large water flow passes the spray heads 14 of the spraying means 8 and carries any blocking debris back to the reservoir tank 17. This virtually eliminates spray head blockage. Filters that can be provided on the circulatory pump can trap the debris so that it does not enter the system again. This improvement to the aeroponic system makes commercial aeroponics viable since less maintenance of the spraying means is required.

The spraying means used according to one embodiment of present invention are jets. One preferred way of operation is that the jets are positioned centrally on the top of a flow pipe and jet in a half circle at an upward angle of about 60 degrees. The plastic flow delivery pipe is drilled and then tapped to comply with the correct thread entry of the screw-in jet. When two jets are inserted adjacently below the pipe, with a separation of approximately 120 degrees, a full circle is sprayed in a horizontal plane to their insertion point. The threading of the insertion holes of the flow pipe allows quick removal, clearing and then replacement of any blocked jets. The use of multiple jets along the flow line ensures surplus water delivery, covering any short-term delivery deficiency of an individual jet.

According to present invention the flow pipe can be rotated to adjust the spray plane level, and can even be rotated 180 degrees to provide an upward rather than downward water spray. A flow pipe can be very quickly and easily removed from its mounting, and replaced with an alternative flow pipe with differing jet positioning.

The total jet pipe assembly can be snap fitted into the aeroponic growth tank and can quickly be inverted, removed or exchanged as required.

The flow jet assembly, although normally centrally mounted in the aeroponic growth tank, can be slid within its mounts to allow the slight adjustment needed to take the jet mount pipes away from plant mount holes when they coincide with the flow pipe position on certain plant spacing.

In one embodiment of present invention the movable aeroponic growth unit comprises a rubber mount 18 for mounting a plant 5 that fits over at least one aperture 7. Normally in aeroponic systems seeds or cuttings are mounted in a plastic cup suspended in the polystyrene top. Instead of using cups for mounting, once sufficiently grown, according to present invention the plants are rubber mounted individually. The foam rubber used ideally has a sealed smooth finish on top and bottom, so has trapped air and floats, and is about 0.5 cm thick.

The foam rubber is cut into squares of the required size, for example 5 cm. A small hole for the correct size for the initial plant stem thickness is punched out in the centre of the square, and then the rubber foam is cut from the centre of one side to the punched hole. The rubber square can now be opened along the slit, and the individual plantlet slid in without root damage, and the rubber then springs back to its original location. The slit can be permanently closed with a piece of adhesive tape. The stem is now slightly clamped in its punched hole and then its roots are suspended through the hole made for it in the chamber cover.

For first growing on of transferred young seedlings, the rubber mount 18 is floated in a weak nutrient mix with the roots in the water.

The rubber mount 18 has the great advantages of stretching as the plant stem expands with growth without any stem damage, completely stopping any light entering the root chamber 3, and completely stopping evaporation of water from the tank. It has the additional benefit that the plant/root height can be adjusted within the mount 18. When plants are grown conventionally in soil, or in normal hydroponic setups, there is a major slowing of growth when they are re-potted or transplanted. This does not happen in the system of present invention. The growing plants, gripped within their rubber mounts 18, can be easily relocated. This means that the optimum planting density can be maintained at all stages, maximizing the efficient use of growing space.

In one embodiment of present invention as depicted in figures 1 and 2, the movable aeroponic growth unit for growing plants comprises a root tube 19 extending downwards from the bottom of the root chamber 3. This root tube 19 is suitable for receiving the root 4 of a plant 5.

The addition of such a root tube 19 from the bottom of the root chamber 3 for each plant 5 makes a drastic difference. The pipe is extending at right angles to the aeroponics growth unit, and draining by a small tube/pipe into the return to reservoir pipe. As can be seen on Figure 2 the root tube preferably has an upturn at its far end at the limit of the frame, so that the water from the tube does not run out. Furthermore, the root runs through the root tube and can be gripped at the exit of the root tube by a clothes peg. The plant root 4 is drawn down the root tube 19 and end pruned when it protrudes. As the plant fruits, the leaves and spent fruit limbs are removed and the plant 5 lowered into the aeroponic root chamber 3. New roots develop on the lowered stem, and if the root tube 19 conditions are controlled correctly, the existing roots continue to develop within the root tube 19. This allows continuous harvesting as long as the plants are fed and lowered with virtually no downtime.

The system has the additional advantage that the active height of the plant above the tank remains roughly constant, for example for tomato plants this is at 1 to 2 m, which is easy for picking and pruning. This is a great improvement over conventional greenhouse systems where tomatoes grow as high as 7 m.

The moisture level and nutrient flow to the root tube 19 section are a variant of the spray volume in the tank. Surplus nutrient water trickles down the roots and then drains from the end of the root tube 19. The horizontal root tube 19 as shown in figures 1 and 2, is in practice angled slightly downwards to avoid too much standing water in the root tube 19.

In another embodiment of present invention the aeroponic growth unit does not contain root tubes, but the roots are routed within the deepened aeroponic chamber along guiding strings. In this embodiment the roots can thus be guided to extend along horizontal lines of strings that can run from one end of the tank to the other, effectively leading to the roots being "folded" in the root chamber.

This method has several advantages over using root tubes. Firstly the root length can be increased. In a preferred embodiment the total root length can be up to 1.8 meters. In this embodiment the total height of the root chamber can be further reduced, reducing cost and increasing the available foliage height/growing height above the tank. Secondly, because the roots are disciplined to train systematically, the risk of growing roots blocking spray jets is thus eliminated. Thirdly, the box construction of the root frame guidance system, gives a clear central space within the total roots at the lower level of the tank, allowing a lower spray line to specifically spray correctly the lower root area, and reach the lower regimented down, across and upward roots with no obstructions. Fourthly, in the embodiment where the water reservoir is underneath the root chamber, with its reservoir water directly under the roots, the roots are held clear of the water, preventing them becoming waterlogged and dying. Fifthly, the root exit is now high on the structure giving easy access, and can either exit under a water shadow flap high on the side walls, or even through the tank cover.

For successful aeroponic growth it is important that the root chamber is kept dark. However, most covers let light through into the tank resulting in increased growth of algae on the cover and in the tank itself. According to one embodiment of present invention it is envisaged that a sheet of light reflective material is placed over the top of the cover that stops all light entering the tank. Furthermore this sheet over hangs the tank on all sides and thus also provides a tight seal to prevent any water evaporation from the tank. The sheet is pierced at the mount holes in the sheet below to allow plant mounting.

The addition of the tank cover sheet in this embodiment of present invention means that the only air entry point is the drainage pipe in the bottom of the tank, and this can be blocked by water trying to get out. Additional air entry/exit points can thus be fitted to the tank sides to improve air circulation within the tank and to provide cooling/heating of the lower levels of the tank area, and of the foliage level of the greenhouse by leakage. If needed and depending on the requirements of the plants that are grown, such additional air entry/exit points can also be added to other embodiments of present invention.

Up until now, only lightweight produce, such as lettuce, herbs etc., has been commercially grown by aeroponics. For such lightweight produce the polystyrene tops on the aeroponic growth chambers normally used are adequate, although liable to sagging. According to present invention it is envisaged that the mounting of the spray pipes close to the cover of the root chamber, if that is the correct spray height for the crop, provides additional support for the cover, with the spray jets mounted on the lower side of the pipes.

Another possibility envisaged is the spreading of a height adjustable stainless steel or plastic net, or a pipe work frame across the tank, at optional distances below the top to improve the mounting support of heavier crops such as brassica, turnip, leek, celery, potato etc.

Present invention furthermore relates to an improved system for growing plants aeroponically, comprising at least two movable aeroponic growth units as described above. The at least two aeroponic growth units are placed directly adjacent to each other so that the covers of the vessels are tightly fitted against each other. The wheels of the vessels are aligned to allow movement of the vessels along the same movement axis. The improved system for growing plants aeroponically further comprises means for controlling the temperature of the root chamber.

In one embodiment of the invention the aeroponic growth units in the improved system for growing plants aeroponically are arranged in rows. The movement axes of the wheels transverse the longitudinal directions of the rows.

As described above, root temperature control in present invention is preferably done by the control of the temperature of the nutrient flow. The nutrient solution is warmed or cooled to the desired temperature in the nutrient reservoir tanks. A thermostatic temperature control of the reservoir cellar ensures the correct delivery temperature of the nutrient water to the roots, and corrects the temperature of the root area as well as the temperature in the growing room. In one embodiment of the improved system for growing plants aeroponically the means for controlling the temperature in the root chamber comprise a cooling device.

In one embodiment the improved system for growing plants aeroponically comprises a reservoir of nutrient solution or water connected to the spraying means via flexible piping. The flexible piping is required to allow the movement of the aeroponic growth unit. Drainage of excess nutrient solution from the root chambers is performed by the flexible piping to a pipe feed to the nutrient reservoirs. Nutrient water feed is also performed via the flexible piping on the ends of the aeroponic growth unit to a pipe feed from the underground nutrient reservoirs.

The reservoirs can be remote reservoirs used by more than one aeroponic growth unit, or a wheeled reservoir tank provided under each aeroponic growth unit as depicted in figure 2. Figure 1 does not show the local reservoir tank.

It is also an option that the nutrient reservoir tanks be wheeled so that they can be rolled below the aeroponic growth unit to optimize the use of space. This option will be especially useful for use in non-commercial aeroponic systems, where a remote reservoir tank is not used. It can also be used for small-scale needs in commercial systems, such as for example for seedling growing on, rooting etc. In this case, where the aeroponic unit has a water reservoir below, the down drain 20, as shown in figure 2 from the aeroponic chamber 3 takes spray water back to that reservoir 17. At the same time the root tubes 19 drain to that reservoir.

It is a further option of present invention that the nutrient reservoir is located in a cellar below the growing area. In this case better root temperature control is obtained by heating/chilling the cellar and/or by adding a heat exchanger in the tank.

In this embodiment a fall height of at least 2 meters from the drainage exit level at the bottom of the growing tank above to the top surface level of the nutrient reservoir is needed. This ensures a reasonable flow speed on the water returning to the reservoir.

The returning water pipe is not positioned vertically, but angled at between 30 and 45 degrees, and run parallel to one side of the tank. This returning water now creates a circular motion of the water within the tank. The suction pump pipe is positioned at the opposite side of the tank from angled returning water pipe, so as to reinforce this water rotation.

The water at the outside tank walls is now rotating faster than the water in the centre. Any debris in the tank water will be carried in the faster moving water but fall to the bottom in the centre of the tank where the water movement is minimal.

This debris can now be siphoned from the tank, the debris water filtered, and the clean water returned to the tank. This greatly improves the water quality of the reservoir water, prolonging the usable life of the nutrient water, and saving nutrient.

### Greenhouse setup

Present invention also relates to a greenhouse for growing plants aeroponically. This greenhouse comprises the improved system for growing plants aeroponically as described above and a solar chimney for temperature control.

In a tropical climate it is preferable that the greenhouse according to present invention is erected in an East West orientation.

To provide for a cost effective greenhouse, the walls can be made of insulated blocks with a polystyrene sandwich construction. In this sandwich construction two layers of insulation block sandwich the polystyrene or other suitable insulation material, such as rubber or plastic foam. Insulation could also be placed directly against the existing glass or clear plastic walls on existing greenhouses. Plastic materials, such as polystyrene are preferred, as they allow for lighter construction resulting in reduced weight and thickness of the roof steels, which increases the light levels at plant level.

Light impenetrable materials can be used for the walls of the greenhouse. The only light provided for growth of the plants in such setup will come through the roof made of glass or plastic materials. For use of this greenhouse setup in temperate zones supplementary grow lighting is needed in the short daylight hours periods of the year.

In a greenhouse the sidelight is of little use, as its penetration into a growing plant block is minimal, the useful light is overhead. The removal of sidelights and replacement by insulation through a wall sandwich construction as described above greatly reduces heating/cooling costs of the greenhouse without impairing the important overhead light influx.

The greenhouse setup of present invention can furthermore contain roof vents with insect screens to avoid need for pest control.

A thermostatic control for the greenhouse setup of present invention can be fitted in the centre of the roof.

In one embodiment of present invention the greenhouse comprises a cellar in which the reservoir tanks can be stored to allow gravity drainage of the nutrient solution from the growing area.

Air entry pipes, again insect screened, can be fitted high in the wall, preferably of the north wall of the greenhouse in warm and sunny climates, the air supplied being pre-cooled by shading. In temperate regions the air entry pipes can be fitted through the south wall to allow preheating of the air supplied by sun.

In a most preferable embodiment of present invention the greenhouse setup of present invention has no direct external doors, all exits are through an air lock system to prevent heat loss and insect entry. It is constructed as an insect free environment to prevent the need for insecticides.

Internal temperature controls are a combination of cooling/heating by any method, and the roof vent aperture control, such as the solar chimney.

If needed, humidity control can be added to the greenhouse setup.

The greenhouse setup as described above vastly improves temperature, humidity and insect control over conventional greenhouses, while drastically reducing heating/cooling costs.

In another embodiment of present invention the greenhouse comprises a floor made of low friction materials. The aeroponic growth units in this embodiment can then be built without wheels, but instead their bottom is made of material that can be moved easily along the floor of the greenhouse. In this embodiment it is envisaged that guiding rails keep the aeroponic units in their orientation when whole rows are moved at once.

In one preferred embodiment of the greenhouse setup, the condensed water from the cooling units is collected and used for all water needs for filling and topping up the water nutrient tanks. There is thus no longer any need to filter the state water for the needs of the greenhouse.

### Planting setup

The suspension of the roots in the rooting chamber means that the roots no longer spread out horizontally, but instead droop vertically, occupying a very small radius. This allows much closer planting. The radius of the plant foliage becomes the criteria for spacing. Two alternatives of planting can be envisaged. A conventional row spacing with all plants at right angles to each other, or rows that are offset so each row sits down into the radius free space of the next row. The latter is preferred according to present invention as it gives far denser planting and makes an almost inaccessible block of plants. Normal maintenance would be impossible beyond the first two rows without a system that allows movement of the plant units. In one embodiment of the improved method of growing plants aeroponically the plants are planted in an offset manner to improve spacing.

It is preferred that four row deep growing areas are used, that are accessible from both sides. From either side of the row the first row is easily accessed and the second row plants sit neatly between the first row plants and are also easily accessed.

The offset layout is slightly inefficient as the staggered rows lengthen the row length by half the planting radius, but the improved density more than recovers this. As the row length increases, so does the improvement of planting area usage, as every extra plant only increases the row length by the planting radius, the offset space cost only occurring once.

So, in a commercial setup where the row length is 60 plants, as shown in table 2 below, offset planting improves greenhouse utilisation by 112.74% minimum, rising slightly higher as the row length increases further.

Offset planting also improves plant access to the inner second row plants, and can be used easily with the aeroponic growth unit on wheels according to present invention.

| Table 2 : Advantage of plant offset increases with row length | | | | | | |
|---|---|---|---|---|---|---|
| 100 Plants Block | Row Length (cm) | | Row Width (cm) | Area (cm²) | Increased Density | Plant row length |
| Not Offset | 333.33 | | 333,33 | 111,108.89 | | |
| Offset | 350.00 | | 293.22 | 102,627.00 | | |
| | | Improvement by offset | | 92.37% | 108.26% | 10 |
| 600 Plant Block | | | | | | |
| Not Offset | 1,999.98 | | 333.33 | 666,653.33 | | |
| Offset | 2,016.65 | | 293.22 | 591,322.11 | | |
| | | Improvement by offset | | 88.70% | 112.74% | 60 |

### Method of growing plants

Present invention relates to an improved method of growing plants aeroponically comprising the steps of planting plants in the improved system for growing plants aeroponically, controlling the temperature of the nutrient solution and providing the roots in the root chamber with the nutrient solution, and periodically lowering the plants deeper into the growth chamber to increase root development.

The lowering of the plants, i.e. the dropping of the plant further into the root chamber encourages greater root development, and also allow certain plants like leeks or celery to blanch to a greater length of stem, the aeroponic equivalent of earthing up in the conventional garden.

A further advantage of this lowering is that a greater root area is developed faster. For example with tomato plantlets, the lower leaves are removed and the plant lowered into the growing chamber to adjust the first fruiting truss to only just above the chamber cover. This improves the efficient use of the fruiting height above the chamber.

A major problem of conventional soil or hydroponic grown tomatoes is that the cropping progresses further up the stem as the plant matures. This gives rise to maintenance and picking difficulties. The solution as provided in the prior art is to layer the plants. The plants are unstrung, the first metre of stem laid along the ground and the plant restrung. This gives rise to considerable damage to the plants.

The solution of present invention to this problem is instead to progressively remove the lower spent fruit trusses and leaves, loosen the string, and lower the stem through the rubber mount into the root chamber. This gives rise to little damage and prolongs the fruiting considerably. This method applies to any progressive vine growth crops, such as tomatoes, aubergines, peppers, cucumbers, gherkins, and melons.

An additional advantage that comes from lowering the plant and gaining more roots is that the ability of the plant to survive high temperatures is greatly increased. When the foliage temperature increases, the plants leaves can go limp. This is indicative of a higher rate of water evaporation from the leaf than the rate of water intake by the roots. Removal of the older leaves at the base of the plant can reduce this, but it is far better to retain all the leaves and maximize the plant's ability to grow by increasing the root to foliage ratio by lowering the plant and gaining extra roots. The extra roots both improve the plant's ability to withstand higher temperature, and increase its productivity rate. A noted growth rate increase is observed with the method of present invention.

### Suspension of plants

The suspension of growing plants may be required and must allow for the movement of the aeroponics growth unit.

For example, a 5 m suspension line requires an extension of 2.49 cm when moved 50 cm from centre. The suspension is therefore made slightly slack by 2.5 cm when the bandwagon is centrally parked for work access of 50 cm on each side of the row. When the bandwagon is finally parked at the extreme left or right the suspension string returns to full tension and the slight slope from horizontal does not seem to affect the plant growth.

### A simple terminal cord gripper for the suspension of plants

A plastic rubber tube around a string has a high friction point at the bend against the string when the tube is doubled back on itself. This friction is enough to stop the bent tube from releasing the string.

The roof-mounted cord that is wrapped around the plant stem requires a terminal grip at the base of the plant. A knot can be used, however, it becomes tedious to untie and retie the knot for each adjustment as the plant grows.

According to present invention the end of the suspension cord is inserted through a thin plastic tube of about 10 cm in length, fed round the stem base and then looped again through the tubing in the same direction as the original insertion. The tubing containing the cord is now "V-eed" around the stem, the down cord tightened by pulling the cord further through the tubing. The end string is now tightened, bringing home the opposing ends of the tube against each other, into a V shape of approx 5 cm length. The cord is self-end knotted to prevent it returning back through the tube. Length adjustment of the cord can now be done at any time, in either direction.

There is a co-relation between the diameter of the tube, its internal friction and the surface friction of the cord, all of which have to be balanced to obtain the correct resistance to prevent the release of the cord. If this is correctly balanced, the expansion of the stem as it grows will extract enough cord through the tube to avoid constriction of the stem, while still retaining enough hold on the cord to prevent release of the suspension grip. The plastic rubber tubing acts as a soft cushion preventing the string from cutting into the stem.

When a new young plant requires mounting below the pre-mounted suspension cord, the terminal cord gripper is already fitted at the base of the cord to approximately the correct gripping height. The terminal gripper loop is enlarged by pulling through some of the hanging cord length back through the gripper. This will raise the position of the gripper to a higher point on the suspension cord, and provide a much-enlarged mounting loop. The root of the plant is dropped through this loop and the gripper height adjusted to the needed height position, and then tightened in that position by pulling the end cord to mount and grip the plant correctly.

Quick adjustment of the suspension length can be made by feeding spare cord length through the terminal mount in either direction, to release or use up spare length. More serious adjustment is made by uncoiling the terminal base to release spare length on the suspension cord allowing the release of the V, and thus reducing the friction, Adjustments can now be easily made by amending the suspension cord length before retightening.

Variation of the internal diameter of the plastic rubber tube allows variation in the thickness and strength of the support cord to cover a range of requirements.

### An improved method of inserting small bore rubber tube feeds to a larger bore plastic pipe

In micro irrigation systems as an example, the main water feed is a thin walled large bore plastic pipe, to which smaller bore rubber or plastic tubing must joined periodically for the feeding of individual irrigation heads. This is normally done by piercing the main pipe to the correct diameter, and then forcing a small plastic nipple through that piercing, to which the smaller bore rubber plastic pipe is then joined. The diameter of the pierced hole is slightly smaller than the nipple diameter, giving a retaining grip on the nipple. This method has the great disadvantage of water leakage around the nipple junction to the main pipe under water pressure, and the secondary disadvantage of seriously inhibiting the water flow through the rubber plastic pipe because the internal water flow dimension of the nipple over which the rubber plastic pipe is pushed, must be much smaller than that of the rubber plastic pipe because of the thickness of plastic required to construct the nipple to sufficient strength.

An alternative method to the above is to use a much thicker rigid plastic pipe, which is accurately drilled and then tapped to the correct thread size to then insert a pre threaded nipple, which is then screwed home into the plastic pipe. Although this system is time consuming, it does give an improvement to the tightness of the junction between the nipple and the main pipe. Considerable water leakage still occurs, and the same reduction of water flow as above is experienced because of the nipple dimension reducing the water flow cross section dimensions.

According to present invention a system that allows to easily and quickly assemble injector mountings is envisaged. It is based on the fact that a rubber or plastic tube becomes of smaller diameter when stretched, but reverts to its original dimension when the tension is released.

A hole is drilled straight through the centre of the opposing sides of the wall of a rigid plastic pipe. The diameter of this hole is slightly smaller than the normal diameter of the rubber plastic pipe that is to be attached. The end of the rubber plastic tube is cut at a long angle/slant to give a progressive thinning to its end. This thinned end is then pushed through the two opposing holes in the pipe wall, and gripped firmly on its exit point from the far side of the pipe. The tube is then stretched, reducing its diameter, and pulled through the two pipe holes to just short of its required final length. The rubber plastic tube is now punched through its opposing sides to a diameter of a size such that it just retains enough walling to allow the stretched tube to be pulled further, bringing the punched point to rest centered in the middle of the rigid plastic pipe. The tension on the tube is now released; it reverts to its original, larger diameter, giving a very tight and waterproof junction between the tube and pipe. The two opposing punched holes through the tubing are of far larger diameter to that of the equivalent sized nipple, giving a far better water flow through the tubing.

As an alternative to piercing the tubing, on larger bore rigid plastic pipe a cutter can be dropped down the rigid pipe and the tubing be completely severed. This gives an even higher water flow, as the tubing cross section is only very slightly reduced at the gripping constriction point through the rigid pipe hole.

The slight disadvantage of having to always provide two tube exits is minimal. If only one is needed then the second one can be easily blocked.

On larger bore piping, when the access to the pipe internal is easier, only one hole need be drilled in the pipe if only one hole is required.

The slight disadvantage of always providing two tubes on small bore pipe, is outweighed by the speed and ease of the operation, the avoidance of any nipple cost, the watertight fit, and the greatly improved water flow.

## Claims

1. A movable aeroponic growth unit 1 for growing plants comprising
(i) a vessel 2 forming a root chamber 3 for enclosing the root portion 4 of a plant 5
(ii) a cover 6 for sealing the top opening of the vessel 2 comprising at least one aperture 7
(iii) at least one spraying means 8 inside the vessel 2 for humidifying the interior of the vessel 2
(iv) piping for nutrient solution feed to the spray means 8 and for drainage of excess nutrient solution from the root chamber 3,
**characterized in that** the vessel 2 is mounted on at least three wheels 10 that permit free running of the vessel 2 along one movement axis only.

2. The movable aeroponic growth unit 1 for growing plants of claim 1, wherein the spraying means 8 further comprise a pipe with a run off venting valve 15 suitable for high volume bypass flow to avoid blockage of the spraying means 8.

3. The movable aeroponic growth unit 1 for growing plants of claims 1 or 2, further comprising a rubber mount 18 for mounting a plant 5 that fits into the at least one aperture 7.

4. The movable aeroponic growth unit 1 for growing plants of any one of claims 1 to 3, further comprising a root tube 19 extending downwards from the bottom of the root chamber 3 and suitable for receiving the root 4 of a plant 5.

5. The movable aeroponic growth unit 1 for growing plants of any one of claims 1 to 3, further comprising a set of guiding strings in the root chamber 3 for routing the roots 4.

6. An improved system for growing plants aeroponically, comprising at least two movable aeroponic growth units 1 according to claims 1 to 5, further **characterized in that**
(i) the at least two aeroponic growth units 1 are placed directly adjacent to each other so that the covers 6 of the vessels 2 are tightly fitted against each other; and
(ii) wherein the wheels 10 of the vessels 2 are aligned to allow movement of the vessels 2 along the same movement axis; and
(iii) wherein the system further comprises means for controlling the temperature of the root chamber 3.

7. The system of claim 6, wherein the aeroponic growth units 1 are arranged in rows and wherein the movement axes of the wheels 10 transverse the longitudinal directions of the rows.

8. The system of claims 6 or 7, wherein said means for controlling the temperature in the root chamber 3 comprise a cooling device.

9. The system according to claims 6 to 8, further comprising a reservoir 17 of nutrient solution or water connected to the spraying means 8 via flexible piping.

10. The system of claim 9, wherein the reservoir 17 is a remote reservoir used by more than one aeroponic growth unit 1.

11. The system of claim 9, wherein the reservoir 17 is a wheeled reservoir tank provided under each aeroponic growth unit 1.

12. A greenhouse for growing plants aeroponically comprising the systems of any one of claims 6 to 11 and further comprising a solar chimney for temperature control.

13. An improved method of growing plants aeroponically comprising the steps of
(i) planting plants 5 in the improved system for growing plants aeroponically of claims 6 to 11
(ii) controlling the temperature of the nutrient solution and providing the roots 4 in the root chamber 3 with the nutrient solution
(iii) periodically lowering the plants 5 deeper into the growth chamber 3 to increase root development.

14. The method of claim 13, wherein the plants 5 are planted in an offset manner to improve spacing.
